(19) Europäisches Patentamt
European Patent Office
Office européen des brevets

(11) **EP 2 774 894 B1**

(12) **EUROPEAN PATENT SPECIFICATION**

(45) Date of publication and mention
of the grant of the patent:
**22.07.2015 Bulletin 2015/30**

(51) Int Cl.:
***C02F 11/18*** *(2006.01)*     ***B01J 8/00*** *(2006.01)*
***C02F 1/02*** *(2006.01)*

(21) Application number: **13382077.9**

(22) Date of filing: **08.03.2013**

(54) **Continuously operating method for the thermal hydrolysis of organic material and installation for implementing the method**

Kontinuierliches Betriebsverfahren zur thermische Hydrolyse von organischem Material und Installation zur Implementierung des Verfahrens

Procédé fonctionnant en continu pour l'hydrolyse thermique de matières organiques et installation pour la mise en oeuvre de ce procédé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.09.2014 Bulletin 2014/37**

(73) Proprietor: **AQUATEC, PROYECTOS PARA EL SECTOR DEL AGUA, S.A.U.**
**28037 Madrid (ES)**

(72) Inventors:
• **FERNANDEZ-POLANCO FERNANDEZ DE MOREDA, Fernando**
**47011 VALLADOLID (ES)**
• **GONZALEZ CALVO, Rafael**
**47011 VALLADOLID (ES)**
• **SAGREDO EXPOSITO, Rosa**
**47011 VALLADOLID (ES)**

• **VELAZQUEZ YUSTE, Roberto**
**47011 VALLADOLID (ES)**
• **PEREZ ELVIRA, Sara Isabel**
**47011 VALLADOLID (ES)**
• **FERNANDEZ-POLANCO IÑIGUEZ DE LA TORRE, Maria**
**47011 VALLADOLID (ES)**
• **NIETO DIEZ, Pedro Pablo**
**47004 VALLADOLID (ES)**
• **ROUGE, Philippe**
**08018 BARCELONA (ES)**

(74) Representative: **Sugrañes Patentes y Marcas**
**Calle Provenza 304**
**08008 Barcelona (ES)**

(56) References cited:
**EP-A1- 2 181 968**     **WO-A1-00/73221**
**WO-A1-2011/006854**     **US-A1- 2012 111 715**

## Description

## Technical Field of the Invention

The invention belongs to the field of sludge treatment, and particularly to the adaptation of organic material before anaerobic digestion. More specifically, the invention relates to a continuously operating method for the thermal hydrolysis of organic material and to an installation for implementing said method.

## Background of the Invention

In a conventional outline for the anaerobic digestion of organic material, the hydrolysis step (dissolution, liquefaction) limits the overall process kinetics. To enhance the kinetics of this hydrolysis step and to thus enhance the kinetics of the overall methanation process, different physical, chemical and biological processes are applied as a treatment before anaerobic digestion.

Therefore, the thermal hydrolysis process, for example, is based on subjecting the organic material to high temperatures and pressures for relatively long time periods, usually more than 30 minutes. Furthermore, by taking advantage of the high pressure, the hot organic material mass can then be subjected to a sudden decompression process or a flash process to thus achieve the so-called effect of steam explosion, capable of breaking the structure of the flocculi and even the wall structure of the cells of the expanded material, enhancing the biodegradability thereof.

Different commercial thermal hydrolysis processes operate by loads or by batches. For the process to be quasi-continuous, they operate with several reactors subjected to timed loading and unloading cycles. A well-established example at the industrial level is the commercial process known as CAMBI in the specialized circles of the field.

With similar purposes, patent document FR 2820735 describes the use of two reactors operating in parallel by loads; and patent document WO 2011/006854 describes the use of three reactors operating sequentially to achieve a continuous flow like behavior.

Considering the continuous operation, the Porte process (Lumb, C. (1951). Heat treatment as an aid to sludge dewatering-ten years' full-scale operation, Meeting of North Easter Branch, Yorkshire Ouse River Board Offices, Wakefield, Jan. 19th) applies sludge digested under anaerobic conditions using reactors with direct steam injection the purpose of which is to enhance the dehydratability of the starting organic material.

Other patent documents describe continuously operating systems. Patent document US 5593591 from 1997 describes a system in which a sludge pumped under pressure is heated in the line itself before being decompressed by means of a nozzle and entering a flash chamber. The purpose of the treatment is to produce a hydrolyzed sludge with good flow characteristics (free flowing solids).

Patent document US 5785852 from 1998 describes a process and equipment for treating biological sludge to enhance secondary anaerobic digestion. The process is a multi-step process and combines a heating step, an explosive decompression step and a shear force application step. A hydroheater is suggested as the most efficient system for mixing the steam and the sludge to be treated. In this system, the hot, pressurized sludge is brought to a flash chamber operating at atmospheric pressure. The partially disintegrated sludge is brought to a new step where it is subjected to shear forces to complete the cell rupture process.

Patent document EP 1198424 describes a system made up of tanks, containers or receptacles in which the preheating step, reaction step and decompression step are continuously performed. The heating steam is injected by means of mixing devices external to said receptacles. The residence time of the sludge in the hydrolysis reactor is fixed between 5 and 60 minutes.

Patent document ES 2341064 describes a continuously operating system which is energetically integrated within a system for producing electric power from the generated biogas.

Patent document US 2011114570 describes a tubular reactor in which a biological solid is heated by steam injection and is subsequently cooled by means of cold water to prevent sudden boiling in the decompression process.

Patent document WO 2008/115777 describes the use of an external preheater using a stream of steam for heating the mass to be treated. The already hot mass goes through a tubular reactor and is led to a flash chamber. The steam exiting the flash chamber is condensed and recirculated to the preheating tank.

The purpose of all the mentioned techniques is to hydrolyze a feed mass using tubular reactors or tanks in the preheating and reaction steps. The processes used indicate that the operation in both steps is performed with long hydraulic residence times. Likewise, operating with low flow rates leads to the formation of scaling and deposits which shorten the stable operation time of the processes.

The purpose of the invention is a method which enhances the overall efficiency of the anaerobic digestion process of organic material, introducing a continuous thermal hydrolysis pretreatment operation, operating with short residence times, by means of easy-to-transport, standardizable and compact equipment that costs less than the equipment of other commercial technologies.

## Disclosure of the Invention

The method according to the invention comprises, as known, a preheating step, a subsequent reaction step and a later depressurization step.

This method is essentially characterized in that the preheating step comprises the operation of circulating organic material to be hydrolyzed in a first circuit, subjecting it to temperature conditions between 70°C and 140°C; in that the reaction step comprises the operation of circulating organic material extracted from the first circuit in a second circuit, subjecting it to temperature conditions between 130°C and 220°C and pressure conditions between 3 bars and 20 bars in the second circuit; and in that the depressurization step comprises the sudden decompression of organic material continuously extracted from the second circuit.

The operations of feeding and extracting the organic material to be hydrolyzed into/from the first circuit and the operation of feeding the organic material extracted from the first circuit into the second circuit are also performed continuously.

The claimed technology is therefore based on using internal recirculation rings or closed circuits with a high recirculation rate instead of tubular reactors or tanks. The hydrodynamics of the process reduces the formation of scaling and deposits.

According to another feature of the invention, in the preheating step steam recovered from the decompression step is injected into the first circuit.

According to one embodiment, the organic material stream feeding the first circuit is selected so that the hydraulic residence time in this first circuit is from 6 seconds to 30 minutes and/or the organic material stream extracted from the first circuit and fed into the second circuit is selected so that the hydraulic residence time in this second circuit is from 6 seconds to 30 minutes.

The hydraulic residence time in both first and second circuits is preferably from 10 minutes to 15 minutes.

In one variant of the invention, the depressurization step is carried out in a flash chamber at an absolute pressure between 0.5 and 1.4 bars.

According to another aspect of the invention, an installation is disclosed for implementing the method according to the invention. Said installation comprises two circulation sections connected in series for circulating organic material to be treated, means for continuously feeding the organic material into one circulation section; for transferring it from this one circulation section to one other circulation section following same; and for extracting the organic material from the cited one other recirculation section.

Said installation is essentially characterized in that it comprises a feed conduit with first pumping means for supplying a feed flow rate of organic material to be hydrolyzed; a first recirculation circuit or preheating circuit connected to the feed conduit and provided with first drive means suitable for obtaining a recirculation flow rate between 1 to 25 times the feed flow rate; a transfer conduit with second pumping means for transferring a fraction of the flow rate circulating within the first circuit to a second recirculation circuit or reaction circuit connected to the transfer conduit and provided with second drive means suitable for obtaining a recirculation flow rate between 1 to 25 times the transfer flow rate or feed flow rate in this second recirculation circuit; an extraction conduit with a pressure valve for continuously extracting a fraction of the recirculation flow rate from the second circuit; and an expansion chamber connected to the extraction conduit.

In one variant, the installation comprises means for injecting steam from the expansion chamber into the first circuit.

According to an embodiment of interest, the second pumping means are suitable for supplying a feed flow rate to the second circuit with a pressure between 3 bars and 20 bars.

According to another feature of interest, the first and the second recirculation circuits are provided with venting systems for non-condensable gases and non-condensed steam.

According to another feature of interest, the installation comprises means for injecting steam into the second recirculation circuit at a temperature between 130°C to 220°C.

The first pumping means are preferably capable of supplying a feed flow rate to the first recirculation circuit the ratio thereof with respect to the capacity of said first circuit complies with the following ratio:

$$6s \leq \frac{C1}{Qa} \leq 30 \min$$

C1 being the volume or the capacity of the first recirculation circuit, and
Qa being the feed flow rate.

Optionally or simultaneously, the second pumping means are capable of supplying a transfer flow rate to the second recirculation circuit the ratio thereof with respect to the capacity of said second circuit complies with the following ratio:

$$6s \leq \frac{C2}{Qt} \leq 30 \min$$

C2 being the volume or the capacity of the second recirculation circuit, and
Qt being the transfer or feed flow rate in the second recirculation circuit.

**Brief Description of the Drawings**

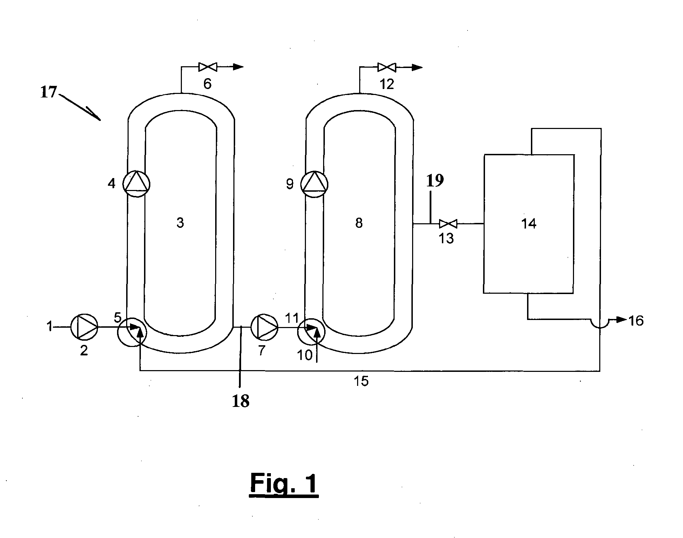

Figure 1 is a diagram of an installation for implementing the method according to a variant of the invention.

**Disclosure of an Embodiment**

The method according to the invention and the means for implementing it are described below in greater detail referring to that end to the diagram of Figure 1.

Figure 1 schematically shows an installation 17 comprising a feed conduit 1 for supplying the organic material to be hydrolyzed with a concentration that can range between 1 and 30% of total solids.

The organic material mass to be treated is pumped by first pumping means 2, formed by one pump or a group of pumps, to the first recirculation circuit 3, which is also referred to as the preheating circuit 3, in which a preheating step for preheating the organic material and a recovery step for recovering steam as described below is carried out. The pumping means 2 are suitable for drawing off solids and must be capable of constantly supplying a feed flow rate Qa at the pressure required by the preheating circuit 3.

The preheating circuit 3 is built with pipe made of any commercial steel, including stainless steel or alloys less sensitive to corrosion. The volume thereof must be sufficient so that the hydraulic feed time can range between 6 seconds and 30 minutes. The operating pressure of the preheating circuit 3 can range between 1 and 5 bars.

In practice, the preheating circuit 3 is an internal recirculation loop or ring in which the first drive means 4 formed by a pump are capable of driving a high circulation flow rate of the organic material mass in order to assure good mixing, accompanied by a correct steam condensation and by the subsequent temperature homogeneity reached in extremely short times. Depending on the rheological characteristics of the circulating mass, the circulation flow rate in the preheating circuit ranges between 1 and 25 times the feed flow rate Qa. Advantageously, the high circulation also successfully eliminates the problems of solid scaling and deposit described by other technologies operating with very low speeds.

It should be noted that steam 15 from the expansion chamber 14 is introduced in the preheating circuit 3 by means of an internal device 5 favoring its mixing with the feed flow rate Qa and internal recirculation flow rate. It is contemplated that this internal device 5 is any solution based on speed variations, nozzles, Venturi effect, or static mixers, the purpose of which is to favor the mixing of the streams involved.

On the other hand, to maintain the pressure in the preheating circuit 3, the preheating circuit 3 is provided with a venting system 6 for non-condensable gases and non-condensed steam. This stream of gas is led to the corresponding treatment system which is beyond the limits of the invention.

A fraction of the stream continuously circulating through the preheating circuit 3, the temperature of which can range between 90 and 140°C depending on the operating conditions, is extracted and driven through a transfer conduit 18 and by means of second pumping means 7 to the second recirculation circuit 8, which is also referred to as the reaction circuit 8. The pumping means 7 are suitable for drawing off solids and must be capable of communicating pressures of up to 20 bars. Preferably, they must be capable of constantly supplying a transfer flow rate Qt to the reaction circuit 8 at the pressure required by this reaction circuit 8.

The reaction circuit 8 is built with pipe made of any commercial steel, including stainless steel or alloys less sensitive to corrosion. The volume thereof must be sufficient so that the hydraulic feed time can range between 6 seconds and 30 minutes. The operating pressure in the reaction circuit 8 can range between 3 and 20 bars, which leads to operating temperatures that range between 130 and 220 °C. Like the preheating circuit 3, the reaction circuit 8 is actually an internal recirculation loop or ring in which corresponding second drive means 9 are capable of driving a high circulation flow rate of the organic material mass in order to assure good mixing, accompanied by a correct steam condensation and by the subsequent temperature homogeneity reached in extremely short times. Depending on the rheological characteristics of the reaction mass, the recirculation flow rate ranges between 1 and 25 times the feed flow rate, i.e., the transfer flow rate Qt. Advantageously, in this second recirculation circuit 8 the high circulation also successfully eliminates the problems of solid scaling and deposit described by other technologies operating with significantly lower speeds.

The steam 10 supplied to the reaction circuit 8 for maintaining the desired reaction temperature is produced in the exemplary installation 17 in a boiler which is not object of this invention. The steam 10 is introduced in the reaction circuit 8 by means of another internal device 11 favoring its mixing with the feed and internal recirculation streams. It is envisaged that the internal device 11 is any solution based on speed variations, nozzles, Venturi effect, or static mixers, the purpose of which is to favor the mixing of the streams involved.

To maintain the pressure in the reaction circuit 8, the reaction circuit 8 is provided with a corresponding venting system 12 for non-condensable gases and non-condensed steam. This stream of gas is led to the corresponding treatment system which is beyond the limits of the invention.

A fraction of the circulating flow rate subjected to the high pressure and temperature conditions in the reaction circuit 8 is continuously extracted therefrom and led, by means of an extraction conduit 19 and through the corresponding expansion valve 13, or decompression valve, to the expansion chamber 14 sized like a conventional flash chamber in which part of the water accompanying the present solids vaporizes as a result of the sudden decompression, steam 15 which is led to the mixing device 5 of the preheating circuit 3 being obtained. The hydrolyzed solid 16 leaves the process and is led to the anaerobic digestion process which is not part of the present invention.

## Embodiment of an Implementation

A continuously operating installation which treats secondary sludge from a process of active sludge generated in an urban waste water treatment plant is described below.

The secondary sludge used is previously concentrated by means of centrifugation until obtaining values comprised between 10 and 20% in total solids. According to the design of the installation, the average feed flow rate Qa supplied by the pumping means 2 to the preheating circuit 3 is 2 m$^3$/h.

To assure the homogeneity of the mixture circulating through the preheating circuit 3, the drive means 4 thereof are ordered to move a flow rate of 20 m$^3$/h, so the internal recirculation ratio is 20/2 = 10.

Since the preheating circuit 3 works with a constant level, according to the overall balance of material of the method, the same amount of material entering the circuit, as a sum of the feed flow rate Qa and flow rate of the stream of steam 15, exits the preheating circuit 3 through the venting system 6 and the transfer conduit 18. In practice, the stream of non-condensable gas and non-condensed steam is insignificant as a result of the overall balance of material.

In the operating conditions of the present example, the temperature sensors placed throughout the preheating circuit 3, not depicted in the diagram of Figure 1, allow checking for a constant temperature which indicates that the target degree of homogeneity is achieved.

The average temperature value in the preheating circuit 3 is 100°C, corresponding to the operation at atmospheric pressure of 1 bar. Depending on the feed flow rate Qa circulated by the first pumping means 2 the residence time in the preheating circuit 3 becomes 6 minutes.

Residence time is understood as the hydraulic residence time or HRT, which is defined as the ratio between the volume of the preheating circuit 3 and the feed flow rate Qa. In other words, it is the average time it takes a solid mass entering the preheating circuit 3 to exit said circuit, to be subsequently transferred to the reaction circuit 8.

In the present example, HRT = C1/Qa where C1 is the volume or the capacity of the first recirculation circuit 3 and Qa the feed flow rate, the value of HRT is 6 minutes.

A transfer flow rate Qt which is fed to the reaction circuit 8 by the pumping means 7, capable of increasing the pressure to 8 bars, is continuously extracted from the preheating circuit 3.

Like the preheating circuit 3, the drive means 9 of the reaction circuit 8 are ordered to circulate a flow rate ten times greater than the transfer flow rate Qt or the effective entrance into the mentioned reaction circuit 8, such that the internal recirculation ratio is equal to ten -10 -, assuring circulating mass homogeneity which can be controlled by means of temperature sensors placed throughout the reaction circuit 8.

Since the reaction circuit 8 works with a constant level, according to the overall balance of material of the method, the same amount of material entering the reaction circuit 8, i.e., the sum of the transfer flow rate Qt and the stream of steam 10, exits the mentioned reaction circuit 8 through the venting system 12 and the extraction conduit 19. According to practice, the stream of non-condensable gas and non-condensed steam is insignificant as a result of the overall balance of material, so the sum of the transfer flow rate Qt from the preheating step and of the condensed steam in the reaction circuit 8 from the stream of steam 10 circulates through the expansion valve 13. With the transfer flow rate Qt driven by the pumping means 7, the hydraulic residence in the reaction circuit 8 becomes 10 minutes.

Therefore in the present example, wherein HRT = C2/Qt, where C2 is the volume or the capacity of the second recirculation circuit 8 and Qt the transfer flow rate or feed flow rate of the second recirculation circuit, the value of HRT is 10 minutes.

In the example, the expansion chamber 14 operates at atmospheric pressure and, like the stream of steam 15 which is led to the preheating circuit 3, the stream of hydrolyzed sludge 16 leaves the system at 100°C.

The efficiency of the method is demonstrated by verifying that the secondary sludge thermally hydrolyzed in this manner has a biogas productivity 50% greater than that of fresh secondary sludge in an anaerobic digestion installation.

## Claims

1. A continuously operating method for the thermal hydrolysis of organic material, comprising a preheating step, a subsequent reaction step and a later depressurization step, **characterized in that** the preheating step comprises the operation of recirculating organic material to be hydrolyzed in a first recirculation circuit, subjecting it to temperature conditions between 70°C and 140°C; **in that** the reaction step comprises the operation of recirculating organic material extracted from the first recirculation circuit in a second recirculation circuit, subjecting it to temperature conditions between 130°C and 220°C and pressure conditions between 3 bars and 20 bars in the second recirculation circuit; and **in that** the depressurization step comprises the sudden decompression of organic material continuously extracted from the second recirculation circuit.

2. The method according to the preceding claim, **characterized in that** the operations of feeding and extracting the organic material to be hydrolyzed into/from the first recirculation circuit and the operation of feeding the organic material extracted from the first recirculation circuit into the second recirculation circuit are performed continuously.

3. The method according to claim 1 or 2, **characterized in that** in the preheating step steam recovered from the decompression step is injected into the first recirculation circuit.

4. The method according to any one of the preceding claims, **characterized in that** the organic material stream feeding organic material into the first recirculation circuit is selected so that the hydraulic residence time is from 6 seconds to 30 minutes.

5. The method according to any one of the preceding claims, **characterized in that** the organic material stream extracted from the first recirculation circuit and fed into the second recirculation circuit is selected so that the hydraulic residence time in this second recirculation circuit is from 6 seconds to 30 minutes.

6. The method according to claims 4 and 5, **characterized in that** the hydraulic residence time in the first and second recirculation circuits is from 5 minutes to 15 minutes.

7. The method according to any one of the preceding claims, **characterized in that** the depressurization step is carried out in a flash chamber operating at an absolute pressure between 0.5 and 1.4 bars.

8. An installation (17) for implementing the method according to claim 1, **characterized in that** it comprises a first and a second recirculation circuits (3, 8) connected in series for recirculating organic material to be treated, means for continuously feeding (2) organic material into the first recirculation circuit (3); for transferring organic material (7) from this first recirculation circuit to the second recirculation circuit (8) following same; and for extracting (19) organic material from the cited second recirculation circuit.

9. The installation (17) according to the preceding claim, **characterized in that** it comprises

 - a feed conduit (1) with first pumping means (2) for supplying a feed flow rate Qa of organic material to be hydrolyzed;
 - a first recirculation circuit (3), acting as a preheating circuit, connected to the feed conduit and provided with first drive means (4) suitable for obtaining a recirculation flow rate between 1 to 25 times the feed flow rate Qa;
 - a transfer conduit (18) with second pumping means (7) for transferring a fraction of the recirculation flow rate from the first recirculation circuit to
 - a second recirculation circuit (8), acting as a reaction circuit, connected to the transfer conduit and provided with second drive means (9) suitable for obtaining a recirculation flow rate between 1 to 25 times the transfer flow rate Qt or feed flow rate in this second recirculation circuit;
 - an extraction conduit (19) with an expansion valve (13) for continuously extracting a fraction of the recirculation flow rate from the second recirculation circuit; and
 - an expansion chamber (14) connected to the extraction conduit.

10. The installation (17) according to the preceding claim, **characterized in that** it comprises means for injecting steam (15) from the expansion chamber (14) into the first recirculation circuit (3).

11. The installation (17) according to any one of claims 8 or 9, **characterized in that** the second pumping means (9) are suitable for supplying a feed flow rate to the second recirculation circuit with a pressure between 3 bars and 20 bars.

12. The installation (17) according to any one of claims 9 to 11, **characterized in that** the first and the second recirculation circuits (3; 8) are provided with venting systems (6, 12) for non-condensable gases and non-condensed steam.

13. The installation (17) according to any one of claims 9 to 12, **characterized in that** it comprises means for injecting steam (10) into the second recirculation circuit (8) at a temperature between 130°C to 220°C.

14. The installation (17) according to any one of claims 8 to 12, **characterized in that** the first pumping means (2) are capable of supplying a feed flow rate Qa to the first recirculation circuit (3) the ratio thereof with respect to the capacity of said first recirculation circuit complies with the following ratio:

$$6s \leq \frac{C1}{Qa} \leq 30\,\mathrm{min}\,,$$

C1 being the volume or the capacity of the first recirculation circuit, and
Qa being the feed flow rate.

15. The installation (17) according to any one of claims 8 to 13, **characterized in that** the second pumping means (7) are capable of supplying a transfer flow rate Qt to the second recirculation circuit (8) the ratio thereof with respect to the capacity of said second recirculation circuit complies with the following ratio:

$$6s \leq \frac{C2}{Qt} \leq 30\,\text{min} \,,$$

C2 being the volume or the capacity of the second recirculation circuit, and
Qt being the transfer or feed flow rate in the second recirculation circuit.

**Patentansprüche**

1. Kontinuierliches Betriebsverfahren zur thermischen Hydrolyse von organischem Material, umfassend einen Vorwärmschritt, einen nachfolgenden Reaktionsschritt und einen späteren Druckentlastungsschritt, **dadurch gekennzeichnet, dass** der Vorwärmschritt den Vorgang der Umwälzung von organischem, zu hydrolysierenden Material in einem ersten Umwälzungskreislauf umfasst, wobei es Temperaturbedingungen zwischen 70°C und 140°C ausgesetzt wird; dass der Reaktionsschritt den Vorgang der Umwälzung von organischem Material, welches aus dem ersten Umwälzungskreislauf entnommen wird, in einem zweiten Umwälzungskreislauf umfasst, wobei es Temperaturbedingungen zwischen 130°C und 220°C und Druckbedingungen zwischen 3 Bar und 20 Bar in dem zweiten Umwälzungskreislauf ausgesetzt wird; und dass der Druckentlastungsschritt die plötzliche Dekompression von organischem Material, welches kontinuierlich von dem zweiten Umwälzungskreislauf entnommen wird, umfasst.

2. Verfahren nach dem vorhergehenden Anspruch, **dadurch gekennzeichnet, dass** die Vorgänge der Zuführung und Entnahme von organischem, zu hydrolysierenden Material in den/von dem ersten Umwälzungskreislauf und der Vorgang der Zuführung von organischem Material, welches aus dem ersten Umwälzungskreislauf entnommen wird, in den zweiten Umwälzungskreislauf kontinuierlich durchgeführt werden.

3. Verfahren nach Anspruch 1 oder 2, **dadurch gekennzeichnet, dass** in dem Vorwärmschritt Dampf, der von dem Dekompressionsschritt gewonnen wird, in den ersten Umwälzungskreislauf eingespeist wird.

4. Verfahren nach einem der vorhergehenden Ansprüche, **dadurch gekennzeichnet, dass** der Strom aus organischem Material, welcher organisches Material in den ersten Umwälzungskreislauf zuführt so ausgewählt wird, dass die hydraulische Verweilzeit 6 Sekunden bis 30 Minuten beträgt.

5. Verfahren nach einem der vorhergehenden Ansprüche, **dadurch gekennzeichnet, dass** der Strom aus organischem Material, welcher aus dem ersten Umwälzungskreislauf entnommen und in den zweiten Umwälzungskreislauf zugeführt wird, so ausgewählt wird, dass die hydraulische Verweilzeit in diesem zweiten Umwälzungskreislauf 6 Sekunden bis 30 Minuten beträgt.

6. Verfahren nach den Ansprüchen 4 und 5, **dadurch gekennzeichnet, dass** die hydraulische Verweilzeit in dem ersten und in dem zweiten Umwälzungskreislauf 5 Minuten bis 15 Minuten beträgt.

7. Verfahren nach einem der vorhergehenden Ansprüche, **dadurch gekennzeichnet, dass** der Druckentlastungsschritt in einer Entspannungskammer durchgeführt wird, welche bei einem Absolutdruck zwischen 0,5 und 1,4 Bar arbeitet.

8. Anlage (17) zur Implementierung des Verfahrens nach Anspruch 1, **dadurch gekennzeichnet, dass** sie einen ersten Umwälzungskreislauf (3) und einen zweiten Umwälzungskreislauf (8), welche für die Umwälzung von organischem, zu behandelnden Material in Reihe geschaltet sind, Mittel (2) für die kontinuierliche Zuführung von organischem Material in den ersten Umwälzungskreislauf (3); Mittel (7) für die Überführung von organischem Material von diesem ersten Umwälzungskreislauf zum zweiten Umwälzungskreislauf (8) nach demselben; und Mittel (19) für die Entnahme von organischem Material aus dem genannten zweiten Umwälzungskreislauf umfasst.

9. Anlage (17) nach dem vorhergehenden Anspruch, **dadurch gekennzeichnet, dass** sie Folgendes umfasst:

   - eine Zuführungsleitung (1) mit ersten Pumpmitteln (2), um eine Zuführungsdurchflussmenge Qa von organischem, zu hydrolysierenden Material zu liefern;
   - einen ersten Umwälzungskreislauf (3), welcher als Vorwärmkreislauf wirkt, der mit der Zuführungsleitung verbunden ist und mit ersten Betätigungsmitteln (4) versehen ist, welche dazu geeignet sind, eine Umwälzungsdurchflussmenge zwischen 1 und 25 Mal die Zuführungsdurchflussmenge Qa zu erhalten;
   - eine Überführungsleitung (18) mit zweiten Pumpmitteln (7), um eine Fraktion der Umwälzungsdurchflussmenge von dem ersten Umwälzungskreislauf zu
   - einem zweiten Umwälzungskreislauf (8), welcher als Reaktionskreislauf wirkt, der mit der Überführungsleitung verbunden ist und mit zweiten Betätigungsmitteln (9) versehen ist, welche dazu geeignet sind, eine Umwälzungsdurchflussmenge zwischen 1 und 25 Mal die Überführungsdurchflussmenge Qt oder Zuführungsdurchflussmenge in diesem zweiten Umwälzungskreislauf zu erhalten, zu überführen;
- eine Entnahmeleitung (19) mit einem Expansionsventil (13), um eine Fraktion der Umwälzungsdurchflussmenge aus dem zweiten Umwälzungskreislauf kontinuierlich zu entnehmen; und
- eine Expansionskammer (14), welche mit der Entnahmeleitung verbunden ist.

10. Anlage (17) nach dem vorhergehenden Anspruch, **dadurch gekennzeichnet, dass** sie Mittel umfasst, um Dampf (15) von der Expansionskammer (14) in den ersten Umwälzungskreislauf (3) einzuspeisen.

11. Anlage (17) nach einem der Ansprüche 8 oder 9, **dadurch gekennzeichnet, dass** die zweiten Pumpmittel (9) dazu geeignet sind, dem zweiten Umwälzungskreislauf eine Zuführungsdurchflussmenge mit einem Druck zwischen 3 Bar und 20 Bar zu liefern.

12. Anlage (17) nach einem der Ansprüche 9 bis 11, **dadurch gekennzeichnet, dass** der erste Umwälzungskreislauf (3) und der zweite Umwälzungskreislauf (8) mit Entlüftungssystemen (6, 12) für nicht kondensierbare Gase und nicht kondensierten Dampf versehen sind.

13. Anlage (17) nach einem der Ansprüche 9 bis 12, **dadurch gekennzeichnet, dass** sie Mittel umfasst, um Dampf (10) in den zweiten Umwälzungskreislauf (8) bei einer Temperatur zwischen 130ºC und 220ºC einzuspeisen.

14. Anlage (17) nach einem der Ansprüche 8 bis 12, **dadurch gekennzeichnet, dass** die ersten Pumpmittel (2) dem ersten Umwälzungskreislauf (3) eine Zuführungsdurchflussmenge Qa liefern können, wobei das Verhältnis derselben in Bezug auf die Kapazität des genannten ersten Umwälzungskreislaufs folgendes Verhältnis erfüllt:

$$6s \leq \frac{C1}{Qa} \leq 30\min,$$

wobei C1 das Volumen oder die Kapazität des ersten Umwälzungskreislaufs und Qa die Zuführungsdurchflussmenge ist.

15. Anlage (17) nach einem der Ansprüche 8 bis 13, **dadurch gekennzeichnet, dass** die zweiten Pumpmittel (7) dem zweiten Umwälzungskreislauf (8) eine Überführungsdurchflussmenge Qt liefern können, wobei das Verhältnis derselben in Bezug auf die Kapazität des genannten zweiten Umwälzungskreislaufs folgendes Verhältnis erfüllt:

$$6s \leq \frac{C2}{Qt} \leq 30\min,$$

wobei C2 das Volumen oder die Kapazität des zweiten Umwälzungskreislaufs und Qt die Überführungs- oder Zuführungsdurchflussmenge in dem zweiten Umwälzungskreislauf ist.

## Revendications

1. Procédé fonctionnant en continu pour l'hydrolyse thermique de matière organique, comprenant une étape de préchauffage, une étape de réaction postérieure et un étape de dépressurisation ultérieure, **caractérisé en ce que** l'étape de préchauffage comprend l'opération de mettre en circulation de la matière organique à hydrolyser dans un première circuit de circulation, en la soumettant à des conditions de température entre 70ºC et 140ºC ; **en ce que** l'étape de réaction comprend l'opération de mettre en circulation de la matière organique extraite du première circuit de circulation dans un deuxième circuit de circulation, en la soumettant à des condition de température entre 130ºC et 220ºC et des conditions de pression entre 3 bars et 20 bars dans le deuxième circuit de circulation ; et **en ce que** l'étape de dépressurisation comprend la décompression soudaine de matière organique extraite en continu du deuxième circuit de circulation.

2. Procédé selon la revendication précédente, **caractérisé en ce que** les opérations d'alimentation et extraction de la matière organique à hydrolyser dans/à partir du premier circuit de circulation et l'opération d'alimentation de la matière organique extraite du premier circuit de circulation dans le deuxième circuit de circulation sont réalisées en continu.

3. Procédé selon la revendication 1 ou 2, **caractérisé en ce que** dans l'étape de préchauffage de la vapeur récupérée de l'étape de décompression est injectée dans le premier circuit de circulation.

4. Procédé selon l'une quelconque des revendications précédentes, **caractérisé en ce que** le courant de matière organique alimentant de la matière organique dans le premier circuit de circulation est choisi de manière que le temps de séjour hydraulique est de 6 secondes à 30 minutes.

**5.** Procédé selon l'une quelconque des revendications précédentes, **caractérisé en ce que** le courant de matière organique extrait du premier circuit de circulation et alimenté dans le deuxième circuit de circulation est choisi de manière que le temps de séjour hydraulique dans ce deuxième circuit de circulation est de 6 secondes à 30 minutes.

**6.** Procédé selon les revendications 4 et 3, **caractérisé en ce que** le temps de séjour hydraulique dans les premier et deuxième circuits de circulation est de 5 minutes à 15 minutes.

**7.** Procédé selon l'une quelconque des revendications précédentes, **caractérisé en ce que** l'étape de dépressurisation est réalisée dans une chambre éclair fonctionnant à une pression absolue entre 0,5 et 1,4 bars.

**8.** Installation (17) pour la mise en oeuvre du procédé selon la revendication 1, **caractérisée en ce qu'**elle comprend un premier et un deuxième circuits de circulation (3, 8) reliés en série pour mettre en circulation de la matière organique à traiter, des moyens pour alimenter en continu (2) de la matière organique dans le premier circuit de circulation (3) ; pour transférer de la matière organique (7) dudit premier circuit de circulation au deuxième circuit de circulation (8) le suivant; et pour extraire (19) de la matière organique dudit deuxième circuit de circulation.

**9.** Installation (17) selon la revendication précédente, **caractérisée en ce qu'**elle comprend :

   - une conduite d'alimentation (1) avec des premiers moyens de pompage (2) pour fournir un débit d'alimentation Qa de matière organique à hydrolyser ;
   - un premier circuit de circulation (3) agissant comme un circuit de préchauffage, relié à la conduite d'alimentation et pourvu de premiers moyens de commande (4) appropriés pour obtenir un débit de circulation entre 1 et 25 fois le débit d'alimentation Qa ;
   - une conduite de transfert (18) avec des deuxièmes moyens de pompage (7) pour transférer une fraction du débit de circulation du premier circuit de circulation à
   - un deuxième circuit de circulation (8), agissant comme un circuit de réaction, relié à la conduite de transfert y pourvu de deuxième moyens de commande (9) appropriés pour obtenir un débit de circulation entre 1 et 25 fois le débit de transfert Qt ou le débit d'alimentation dans ce deuxième circuit de circulation ;
   - une conduite d'extraction (19) avec une soupape d'expansion (13) pour extraire en continu une fraction du débit de circulation du deuxième circuit de circulation ; et
   - une chambre d'expansion (14) reliée à la conduite d'extraction.

**10.** Installation (17) selon la revendication précédente, **caractérisée en ce qu'**elle comprend des moyens pour injecter de la vapeur (15) à partir de la chambre d'expansion (14) dans le premier circuit de circulation (3).

**11.** Installation (17) selon l'une quelconque des revendications 8 ou 9, **caractérisée en ce que** les deuxièmes moyens de pompage (9) sont appropriés pour fournir un débit d'alimentation au deuxième circuit de circulation avec une pression entre 3 bars et 20 bars.

**12.** Installation (17) selon l'une quelconque des revendications 9 à 11, **caractérisée en ce que** le premier et le deuxième circuits de circulation (3 ; 8) sont pourvus de systèmes d'évacuation (6, 12) pour des gaz non condensables et de la vapeur non condensée.

**13.** Installation (17) selon l'une quelconque des revendications 9 à 12, **caractérisée en ce qu'**elle comprend des moyens pour injecter de la vapeur (10) dans le deuxième circuit de circulation (8) à une température entre 130ºC et 220ºC.

**14.** Installation (17) selon l'une quelconque des revendications 8 à 12, **caractérisée en ce que** les premiers moyens de pompage (2) sont aptes à fournir un débit d'alimentation Qa au premier circuit de circulation (3) dont la relation par rapport à la capacité dudit premier circuit de circulation satisfait la relation suivante :

$$6s \leq \frac{C1}{Qa} \leq 30 \min,$$

C1 étant le volume ou la capacité du premier circuit de circulation, et
Qa étant le débit d'alimentation.

**15.** Installation (17) selon l'une quelconque des revendications 8 à 13, **caractérisée en ce que** les deuxièmes moyens de pompage (7) sont aptes à fournir un débit de transfert Qt au deuxième circuit de circulation (8) dont la relation par rapport à la capacité dudit deuxième circuit de circulation satisfait la relation suivante :

$$6s \leq \frac{C2}{Qt} \leq 30 \min,$$

C2 étant le volume ou la capacité du deuxième circuit de circulation, et

Qt étant le débit de transfert ou d'alimentation dans le deuxième circuit de circulation.

**Fig. 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2820735
- WO 2011006854 A
- US 5593591 A
- US 5785852 A
- EP 1198424 A
- ES 2341064
- US 2011114570 A
- WO 2008115777 A

**Non-patent literature cited in the description**

- **LUMB, C.** *Heat treatment as an aid to sludge dewatering-ten years' full-scale operation, Meeting of North Easter Branch, Yorkshire Ouse River Board Offices,* 19 January 1951